# EUROPEAN PATENT APPLICATION

(11) **EP 2 922 306 A1**
(43) Date of publication of application: **23.09.2015**
(21) Application number: 14200114.8
(22) Date of filing: 23.12.2014
(51) Int. Cl.: H04N 21/442

(54) **Personalization service method and system linked to user terminal**

(30) Priority: 18.03.2014 KR 20140031455
(71) Applicant: Humax Co., Ltd., Yongin-si 449-934 (KR)
(72) Inventor: Lee, Chang Woo, 448-971 Yongin-si, Gyeonggi-do (KR)
(74) Representative: Stolmár & Partner Patentanwälte PartG mbB

(57) **Abstract**

Disclosed herein are a personalization service system and method linked to a user terminal, wherein when a smart phone used by a user is brought close to TV or an STB within a specific distance, the smart phone and the TV or STB are automatically paired and menus, such as e-mail, news information, and favorite TV channels received by the smart phone, are reproduced on a screen of the TV. The personalization service system may include a user terminal configured to perform pairing with an external device when the external device is brought close to a specific distance and to send its personalization information to the external device and a broadcasting reception terminal configured to perform pairing with the user terminal when the user terminal is brought close to a specific distance and to perform control so that the personalization information is received from the user terminal and displayed

## Description

### BACKGROUND OF THE INVENTION

### Field of the Invention

Exemplary embodiments of the present invention relate to a personalization service method and system linked to a user terminal, and more particularly, to a personalization service system and method linked to a user terminal, wherein when a smart phone used by a user is brought close to TV or a Set-Top Box (STB) within a specific distance, the smart phone and the TV or STB are automatically paired and menus, such as e-mail, news information, and favorite TV channels received by the smart phone, are reproduced on a screen of the TV, thereby enabling the user to use information stored in the smart phone and to easily and immediately use TV menus, frequently used by the user, through the TV having a wide screen.

### Description of the Related Art

Recently, technologies for digital TV or Internet TV are rapidly developed. Digital TV or Internet TV is advantageous in that video data having clearer output is implemented because broadcasting data is converted into digital data and transmitted.

Such digital TV or Internet TV needs to be equipped with a broadcasting receiver called an STB. The STB functions to receive broadcasting data and to store the broadcasting data in order to send the broadcasting data to digital TV or Internet TV or to control the output of the broadcasting data.

In IPTV, when a user holds a remote controller in his hand, turns on power, and selects a desired channel in order to watch digital TV or Internet TV, a remote controller signal from the remote controller is transmitted to an STB.

The STB receives and processes the remote controller signal. In order for application content to receive the remote controller signal, the remote controller signal needs to be processed according to the processing procedure of the hierarchical module of a system and be finally transferred to the application content. That is, the infrared (IR) receiver of STB hardware receives the remote controller signal, and the operating system (RTOS) of the STB receives the remote controller signal through a device driver. Accordingly, bidirectional content receives the remote controller signal through middleware (M/W) and processes the received remote controller signal in response to a request from a user. Such a hierarchical processing structure is problematic in that a user may feel uneasy in using bidirectional content that requires a rapid response time because a response time according to control of the remote controller is long.

[Prior Art Document]

[Patent Document]

(Patent Document 0001) Japanese Patent Application Publication No. 10-2013-187589 (September 19, 2013)

### SUMMARY OF THE INVENTION

An object of the present invention is to provide a personalization service system and method linked to a user terminal, wherein when a smart phone used by a user is brought close to TV or an STB within a specific distance, the smart phone and the TV or STB are automatically paired and menus, such as e-mail, news information, and favorite TV channels received by the smart phone, are reproduced on a screen of the TV, thereby enabling the user to use information stored in the smart phone and to use TV menus, frequently used by the user, easily and immediately through the TV having a wide screen.

In accordance with an aspect of the present invention for achieving the object of the present invention, there is provided a personalization service system linked to a user terminal, including a user terminal configured to perform pairing with an external device when the external device is brought close to a specific distance and to send personalization information of the user terminal to the paired external device and a broadcasting reception terminal configured to perform pairing with the user terminal when the user terminal is brought close to a specific distance and to perform control so that the personalization information is received from the user terminal and displayed, wherein the broadcasting reception terminal recognizes the displayed personalization information and performs a service or function linked to the personalization information.

In this case, the personalization information includes e-mail and text personally received a user, news personally used by the user, information about favorite TV channels, applications operating in background, and applications being executed when performing the pairing.

Furthermore, the broadcasting reception terminal sets a broadcasting channel, played back by the TV terminal, as a favorite TV channel or a minor restriction TV channel in response to a selection signal from a remote controller in the state in which the broadcasting reception terminal has been paired with the user terminal.

Furthermore, the broadcasting reception terminal changes a favorite TV channel, set in the TV terminal in the state in which the broadcasting reception terminal has been paired with the user terminal, into a predetermined favorite TV channel of the pairing state and sets the predetermined favorite TV channel as a favorite TV channel, if the broadcasting reception terminal is subsequently paired with the user terminal again.

Furthermore, after being paired with the user terminal, the broadcasting reception terminal receives user information, including the name, age, and telephone number of a user from the user terminal, releases the setting of a minor restriction TV channel not played back by the TV terminal based on the received user information, and plays back the broadcasting of the minor restriction TV channel through the TV terminal.

Furthermore, the broadcasting reception terminal executes and displays an application, being executed by the user terminal or waiting in background when performing the pairing, in response to a user selection.

Furthermore, the broadcasting reception terminal performs the pairing with the user terminal using a short-distance wireless communication and Machine-to-Machine (M2M) communication method.

In accordance with another aspect of the present invention for achieving the object of the present invention, there is provided a personalization service system linked to a user terminal, including a user terminal configured to perform pairing with an external device when the external device is brought close to a specific distance and to send personalization information, externally received over a mobile communication network, to the paired external device and a TV terminal configured to perform pairing with the user terminal when the user terminal is brought close to a specific distance, receive the personalization information from the user terminal, and perform a service or function linked to the personalization information.

Furthermore, the TV terminal sets a broadcasting channel, played back on a screen, as a favorite TV channel or a minor restriction TV channel in response to a selection signal from a remote controller in the state in which the TV terminal has been paired with the user terminal.

Furthermore, with respect to a favorite TV channel set in the state in which the TV terminal has been paired with the user terminal, if the TV terminal is subsequently paired with the user terminal again, the TV terminal changes a favorite TV channel, set in the TV terminal in the state in which the TV terminal has not been paired with the user terminal, into a predetermined favorite TV channel of the pairing state and sets the predetermined favorite TV channel as a favorite TV channel.

Furthermore, after being paired with the user terminal, the TV terminal receives user information, including the name, age, and telephone number of a user from the user terminal, releases the setting of a minor restriction TV channel not played back on a screen based on the received user information, and plays back the broadcasting of the minor restriction TV channel.

Furthermore, the TV terminal performs the pairing with the user terminal using a short-distance wireless communication and Machine-to-Machine (M2M) communication method.

In accordance with yet another aspect of the present invention for achieving the object of the present invention, there is provided a broadcasting reception terminal for receiving information or data from a user terminal and displaying the information or data on a TV terminal, including a communication unit configured to send and receive data or information to and from a user terminal over a communication network; a TV connection unit configured to connect with the TV terminal; a data storage unit configured to store data or information received from the user terminal or store file information output by the TV terminal; a packet generation unit configured to generate a packet including file information and selection location information when a selection signal is generated by the manipulation of the user terminal or a remote controller; a location confirmation unit configured to receive the information about the selection signal and location from the user terminal, convert the information about the selection signal and location into a corresponding location on a screen of the TV terminal, and check the selection location of the user; and a control unit configured to perform pairing with the user terminal when the user terminal is brought close to a specific distance, to receive information about e-mail, text, news, and favorite TV channels from the user terminal, and to perform control so that the information about e-mail, text, news, and favorite TV channels is displayed on the TV terminal.

Furthermore, the control unit sets a broadcasting channel, played back by the TV terminal, as a favorite TV channel or a minor restriction TV channel in response to a selection signal from the remote controller in the state in which the broadcasting reception terminal has been paired with the user terminal.

Furthermore, the control unit changes a favorite TV channel, set in the state in which the broadcasting reception terminal has been paired with the user terminal, into a predetermined favorite TV channel of the pairing state and sets the predetermined favorite TV channel as a favorite TV channel, if the broadcasting reception terminal is subsequently paired with the user terminal again.

Furthermore, after the pairing with the user terminal is performed, the control unit receives user information, including the name, age, and telephone number of a user from the user terminal, releases the setting of a minor restriction TV channel not played back by the TV terminal based on the received user information, and plays back the broadcasting of the minor restriction TV channel through the TV terminal.

Furthermore, the control unit performs the pairing with the user terminal using a short-distance wireless communication and Machine-to-Machine (M2M) communication method.

In accordance with still yet another aspect of the present invention for achieving the object of the present invention, there is a personalization service method of TV linked to a user terminal in a system including a user terminal, a broadcasting reception terminal, and a TV terminal, including the steps of (a) performing, by the user terminal and the broadcasting reception terminal, pairing when the user terminal and the broadcasting reception terminal are brought close to a specific distance; (b) sending, by the user terminal, personalization information received over a mobile communication network to the paired broadcasting reception terminal; and (c) performing, by the broadcasting reception terminal, a service or function linked to the personalization information.

Furthermore, the step (c) includes setting, by the broadcasting reception terminal, a broadcasting channel, played back by the TV terminal, as a favorite TV channel or a minor restriction TV channel in response to a selection signal from a remote controller in the state in which the broadcasting reception terminal has been paired with the user terminal.

Furthermore, the step (c) includes changing, by the broadcasting reception terminal, a favorite TV channel, set in the TV terminal in the state in which the broadcasting reception terminal has been paired with the user terminal, into a predetermined favorite TV channel of the pairing state and setting the favorite TV channel as the predetermined favorite TV channel if the broadcasting reception terminal is subsequently paired with the user terminal again.

Furthermore, the step (b) includes sending, by the user terminal, user information including the name, age, and telephone number of a user to the broadcasting reception terminal, and the step (c) includes releasing, by the broadcasting reception terminal, the setting of a minor restriction TV channel not played back by the TV terminal based on the received user information and playing back the broadcasting of the minor restriction TV channel through the TV terminal.

Furthermore, the step (a) includes performing the pairing with the broadcasting reception terminal using a short-distance wireless communication and Machine-to-Machine (M2M) communication method.

In accordance with further yet another aspect of the present invention for achieving the object of the present invention, there is provided a personalization service method linked to a user terminal, which is performed by a broadcasting reception terminal configured to receive information or data from a user terminal and display the information or data on a TV terminal, including the steps of (a) performing pairing with the user terminal when the user terminal is brought close to a specific distance; (b) receiving personalization information from the paired user terminal; and (c) performing a service or function linked to the received personalization information.

Furthermore, the step (a) includes performing the pairing with the user terminal using a short-distance wireless communication and Machine-to-Machine (M2M) communication method.

Furthermore, the step (b) includes receiving user information, including the name, age, and telephone number of a user, from the user terminal, and the step (c) includes releasing the setting of a minor restriction TV channel not played back by the TV terminal based on the received user information and playing back the broadcasting of the minor restriction TV channel through the TV terminal.

Furthermore, the step (c) includes setting a broadcasting channel, played back by the TV terminal, as a favorite TV channel or a minor restriction TV channel in response to a selection signal from a remote controller in the state in which the broadcasting reception terminal has been paired with the user terminal.

Furthermore, the step (c) includes changing, by the broadcasting reception terminal, a favorite TV channel, set in the TV terminal in the state in which the broadcasting reception terminal has been paired with the user terminal, into a predetermined favorite TV channel of the pairing state and setting the favorite TV channel as the predetermined favorite TV channel if the broadcasting reception terminal is subsequently paired with the user terminal again.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a diagram schematically illustrating an overall configuration of a personalization service system linked to a user terminal in accordance with an embodiment of the present invention;
FIG. 2 is a diagram schematically illustrating an overall configuration of a personalization service system linked to a user terminal in accordance with another embodiment of the present invention;
FIG. 3 is a diagram illustrating the configuration of the function blocks of a broadcasting reception terminal in accordance with an embodiment of the present invention;
FIG. 4 is a diagram illustrating an overall flowchart illustrating a personalization service method linked to a user terminal in accordance with an embodiment of the present invention; and
FIG. 5 is a flowchart illustrating a personalization service method linked to a user terminal which is performed by the broadcasting reception terminal in accordance with an embodiment of the present invention.

### DESCRIPTION OF SPECIFIC EMBODIMENTS

The present invention may be modified in various ways and may have several embodiments. Specific embodiments of the present invention are illustrated in the drawings and are described in detail. It is however to be noted that the present invention is not intended to be limited to the specific embodiments, but is intended to include all modifications, equivalents, or substitutions which fall within the spirit and technical scope of the present invention.

Hereinafter, a personalization service method and system linked to a user terminal in accordance with some embodiments of the present invention are described in detail with reference to the accompanying drawings. In describing the embodiments of the present invention with reference to the accompanying drawings, the same reference numbers are used throughout the drawings to refer to the same or like parts, and redundant descriptions thereof are omitted.

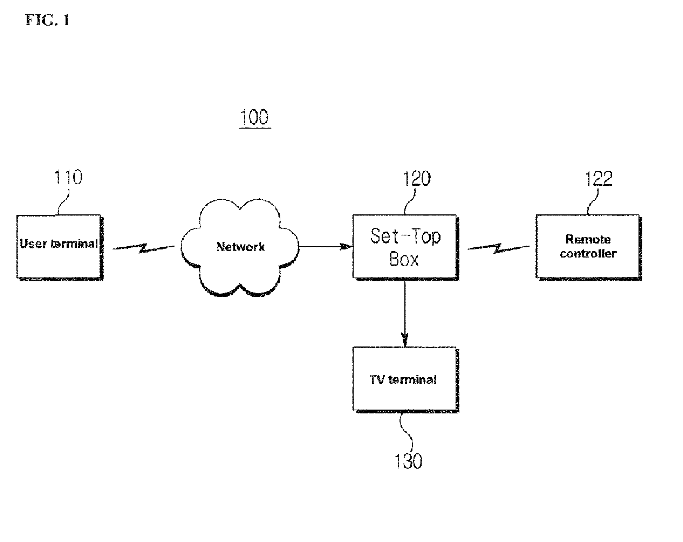

FIG. 1 is a diagram schematically illustrating an overall configuration of a personalization service system linked to a user terminal in accordance with an embodiment of the present invention.

Referring to FIG. 1, the personalization service system 100 linked to a user terminal in accordance with an embodiment of the present invention includes a user terminal 110, a broadcasting reception terminal 120, and a TV terminal 130.

The user terminal 110 functions to perform pairing with an external device when the external device is brought close to a specific distance and to send personalization information, externally received over a mobile communication network, to the paired external device. For example, the user terminal 110 may be a mobile device, such as a smart phone. In this case, the personalization information may mean all pieces of information being executed by the user terminal 110 when the pairing is performed, such as a user's e-mail, text, favorite TV channels, news, SNS, and all applications being executed by the user. In this case, all the applications also include applications being executed in background.

The broadcasting reception terminal 120 may be an STB, for example. The broadcasting reception terminal 120 receives a service request signal, a menu selection signal, or the TV control signal from a remote controller 122 and controls the TV terminal 130 in response to the service request signal, the menu selection signal. Alternatively, when the user terminal 110 is brought close to a specific distance, the broadcasting reception terminal 120 performs pairing the user terminal 110, receives personalization information from the user terminal 110, and performs control so that a service or function linked to the received personalization information is executed by the TV terminal 130.

Furthermore, in the state in which the broadcasting reception terminal 120 has been paired with the user terminal 110, it sets a broadcasting channel, being played back through the TV terminal 130, as a favorite TV channel or a minor restriction TV channel in response to a selection signal from the remote controller 122.

Furthermore, with respect to a favorite TV channel set in the state in which the broadcasting reception terminal 120 has been paired with the user terminal 110, if the broadcasting reception terminal 120 is subsequently paired with the user terminal 110 again, it changes the favorite TV channel set in the TV terminal 130 into a predetermined favorite TV channel of the pairing state and sets the predetermined favorite TV channel as a favorite TV channel.

After being paired with the user terminal 110, the broadcasting reception terminal 120 receives user information, such as the name, age, and telephone number of a user, from the user terminal 110, releases the setting of a minor restriction TV channel not being played back by the TV terminal 130 based on the received user information, and plays back the broadcasting of the minor restriction TV channel through the TV terminal 130.

Furthermore, the broadcasting reception terminal 120 enables applications (e.g., including text, e-mail, and SNS), being executed by the user terminal 110 when being paired with the user terminal 110, to be automatically executed by the TV terminal 130. For example, the broadcasting reception terminal 120 may display a text message screen or SNS connected to a sender along with a received message on the TV terminal 130 so that a user may selectively write a message.

For example, the broadcasting reception terminal 120 may display an image of a channel received through the TV terminal 130 of an ON state while a user listens to music, but may output the music in sound or execute the aforementioned operation in response to a user selection.

For example, if a user listens to music and watches a moving image or TV, the broadcasting reception the terminal 120 may analyze corresponding metadata and may recommend a similar genre or the same program on an EPG or through an external server or automatically attempt pre-zapping.

Furthermore, the broadcasting reception terminal 120 performs pairing with the user terminal 110 using a short-distance wireless communication and Machine-to-Machine (M2M) communication method.

The TV terminal 130 receives a TV broadcasting signal in response to a TV control signal from the broadcasting reception terminal 120 and displays the TV broadcasting signal on its screen or receives personalization information from the broadcasting reception terminal 120 and sets a corresponding menu based on the received personalization information or display the received personalization information on its screen.

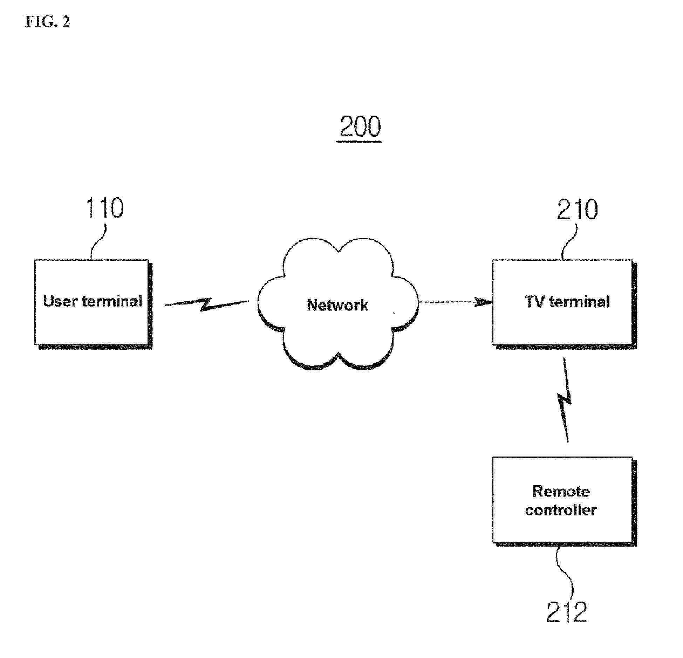

FIG. 2 is a diagram schematically illustrating an overall configuration of a personalization service system linked to a user terminal in accordance with another embodiment of the present invention.

Referring to FIG. 2, the personalization service system 200 linked to a user terminal in accordance with another embodiment of the present invention includes the user terminal 110 and a TV terminal 210.

In this case, the user terminal 110 has the same functions as those of the user terminal of FIG. 1. When the TV terminal 210 is brought close to a specific distance, the user terminal 110 perform pairing with the TV terminal 210 and sends personalization information to the paired TV terminal 210.

The TV terminal 210 receives a service request signal, a menu selection signal, or a TV control signal from the remote controller 212 and controls the TV terminal 210 in response to the service request signal, the menu selection signal, or the TV control signal. Alternatively, when the user terminal 110 is brought close to a specific distance, the TV terminal 210 performs pairing with the user terminal 110, receives personalization information from the user terminal 110, and sets a corresponding menu based on the received personalization information or displays the received personalization information on its screen.

That is, the TV terminal 210 has a structure in which the broadcasting reception terminal 120 of FIG. 1 is embedded and performs both the functions of the broadcasting reception terminal 120 and the functions of the TV terminal.

Furthermore, in the state in which the TV terminal 210 has been paired with the user terminal 110, the TV terminal 210 sets a broadcasting channel, being played back on its screen, as a favorite TV channel in response to a selection signal from a remote controller 212 or sets the broadcasting channel as a minor restriction TV channel.

Furthermore, with respect to a favorite TV channel set in the state in which the TV terminal 210 has been paired with the user terminal 110, if the TV terminal 210 is subsequently paired with the user terminal 110 again, the TV terminal 210 changes a favorite TV channel, set in the TV terminal 210 in the state in which the TV terminal 210 has not been paired with the user terminal 110, into a predetermined favorite TV channel of the pairing state and sets the predetermined favorite TV channel as a favorite TV channel.

After being paired with the user terminal 110, the TV terminal 210 receives user information, such as the name, age, and telephone number of a user, from the user terminal 110, releases the setting of a minor restriction TV channel, not being played back on its screen, based on the received user information, and plays back the broadcasting of the minor restriction TV channel.

Furthermore, the TV terminal 210 automatically executes applications (e.g., including text, e-mail, and SNS) that are being executed by the user terminal 110 when being paired with the user terminal 110. For example, the TV terminal 210 may display a text message screen along with a received message or may display an image of a channel received through the TV terminal 210 of an ON state while a user listens to music, but may output the music in sound or execute the aforementioned operation in response to a user selection

Furthermore, the TV terminal 210 performs pairing with the user terminal 110 using a short-distance wireless communication and M2M communication method.

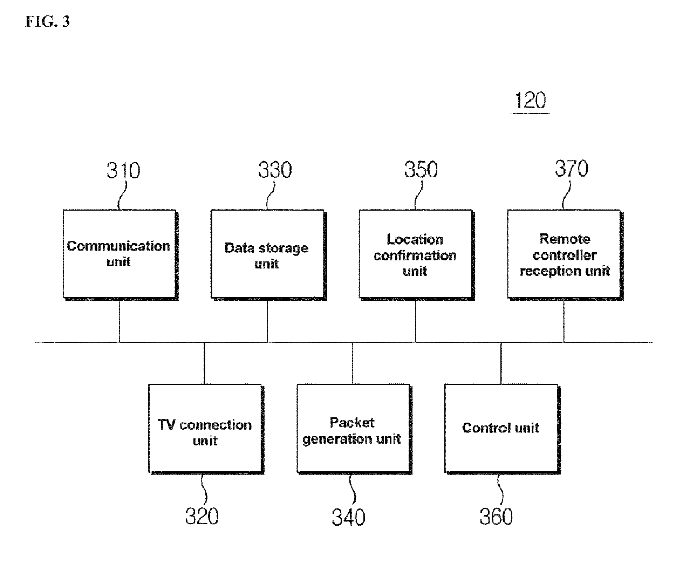

FIG. 3 is a diagram illustrating the configuration of the function blocks of a broadcasting reception terminal in accordance with an embodiment of the present invention.

Referring to FIG. 3, the broadcasting reception terminal 120 in accordance with an embodiment of the present invention includes a communication unit 310, a TV connection unit 320, a data storage unit 330, a packet generation unit 340, a location confirmation unit 350, a control unit 360, and a remote controller reception unit 370.

The communication unit 310 sends and receives data or information to and from the user terminal 110 over a communication network.

The TV connection unit 320 is connected to the TV terminal 130 in a wired or wireless way.

The data storage unit 330 stores data or information received from the user terminal 110 or stores file information output to the TV terminal 130.

The packet generation unit 340 generates a packet that includes information about a file and a selection location in response to a selection signal generated by the manipulation of the user terminal 110 or the remote controller 122.

The location confirmation unit 350 receives information about a selection signal and a location from the user terminal 110, converts the received information into a corresponding location on a screen of the TV terminal 130, and checks a location selected by a user based on the converted location.

When the user terminal 110 is brought close to a specific distance, the control unit 360 performs pairing with the user terminal 110, receives information about e-mail, text, news, and favorite TV channels from the user terminal 110, and controls the TV terminal 130 so that it displays the received information.

Furthermore, in the state in which the control unit 360 has been paired with the user terminal 110, it sets a broadcasting channel, being played back through the TV terminal 130, as a favorite TV channel or a minor restriction TV channel in response to a selection signal from the remote controller 122.

Furthermore, with respect to a favorite TV channel set in the state in which the control unit 360 has been paired with the user terminal 110, if the control unit 360 is subsequently paired with the user terminal 110 again, it changes the favorite TV channel set in the TV terminal 130 into a predetermined favorite TV channel of the pairing state and sets the predetermined favorite TV channel as a favorite TV channel. For example, a first user terminal 'A' of a first user can be paired with the STB. Then, the favorite TV channel of the TV terminal 130 is the favorite TV channel which was set at the previous pairing between the first user terminal 'A' and the STB. Also, the paring can be changed such that a second user terminal 'B' of a second user is paired with the STB. Then, the favorite TV channel of the TV terminal 130 is the favorite TV channel which was set at the previous paring between the second user terminal 'B' and the STB. In short, the STB determines a current favorite TV channel for the TV terminal with the favorite TV channel of the user terminal which is currently paired with the STB.

After being paired with the user terminal 110, the control unit 360 receives user information, such as the name, age, and telephone number of a user, from the user terminal 110, releases the setting of a minor restriction TV channel not being played back by the TV terminal 130 based on the received user information, and plays back the broadcasting of the minor restriction TV channel in the TV terminal 130. For example, it is illegal to provide minors under age 20 with adult contents. These adult contents may be indicated as the minor restriction TV channel.

Furthermore, the control unit 360 performs pairing with the user terminal 110 using a short-distance wireless communication and M2M communication method.

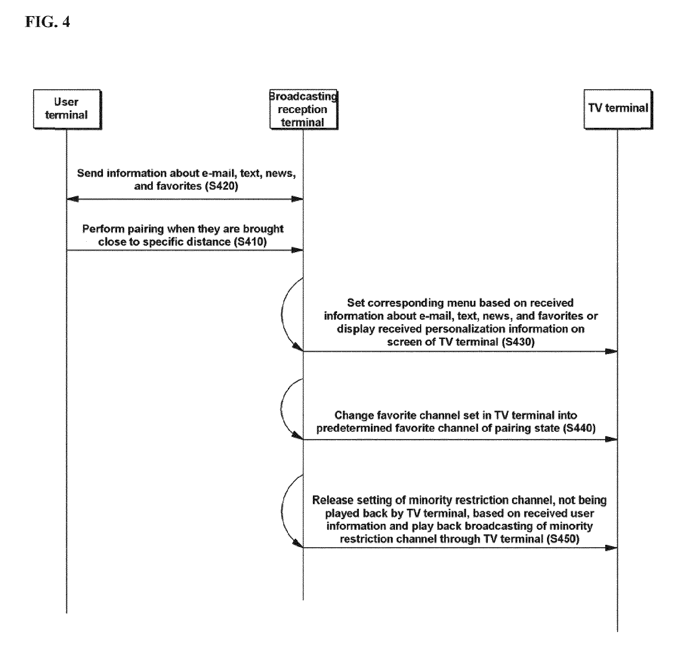

FIG. 4 is a diagram illustrating an overall flowchart illustrating a personalization service method linked to a user terminal in accordance with an embodiment of the present invention.

Referring to FIG. 4, the user terminal 110 and the broadcasting reception terminal 120 in accordance with an embodiment of the present invention perform pairing when they are brought close to a specific distance at step S410.

In this case, the broadcasting reception terminal 120 and the user terminal 110 perform pairing using a short-distance wireless communication and M2M communication method.

Thereafter, the user terminal 110 sends personalization information to the paired broadcasting reception terminal 120 at step S420. That is, the user terminal 110 may send information about e-mail, text, news, and favorite TV channels, all applications being executed by news, SNS, and a user, and all pieces of information (including applications being executed in background) being executed when the pairing is performed to the broadcasting reception terminal 120 as the personalization information.

In this case, the user terminal 110 may also send the personalization information, including the name, age, and telephone number of a user, to the broadcasting reception terminal 120.

Thereafter, the broadcasting reception terminal 120 sets a corresponding menu based on the received personalization information or displays the received personalization information on a screen of the TV terminal automatically or in response to a user selection at step S430.

In this case, in the state in which the broadcasting reception terminal 120 has been paired with the user terminal 110, it sets a broadcasting channel, being played back through the TV terminal, as a favorite TV channel or a minor restriction TV channel in response to a selection signal from the remote controller 122.

Furthermore, with respect to a favorite TV channel set in the state in which the broadcasting reception terminal 120 has been paired with the user terminal 110, if the broadcasting reception terminal 120 is subsequently paired with the user terminal 110 again, it changes the favorite TV channel set in the TV terminal into a predetermined favorite TV channel of the pairing state and sets the predetermined favorite TV channel as a favorite TV channel (S440).

Furthermore, the broadcasting reception terminal 120 releases the setting of a minor restriction TV channel, not being played back by the TV terminal, based on the received user information and plays back the broadcasting of the minor restriction TV channel through the TV terminal at step S450.

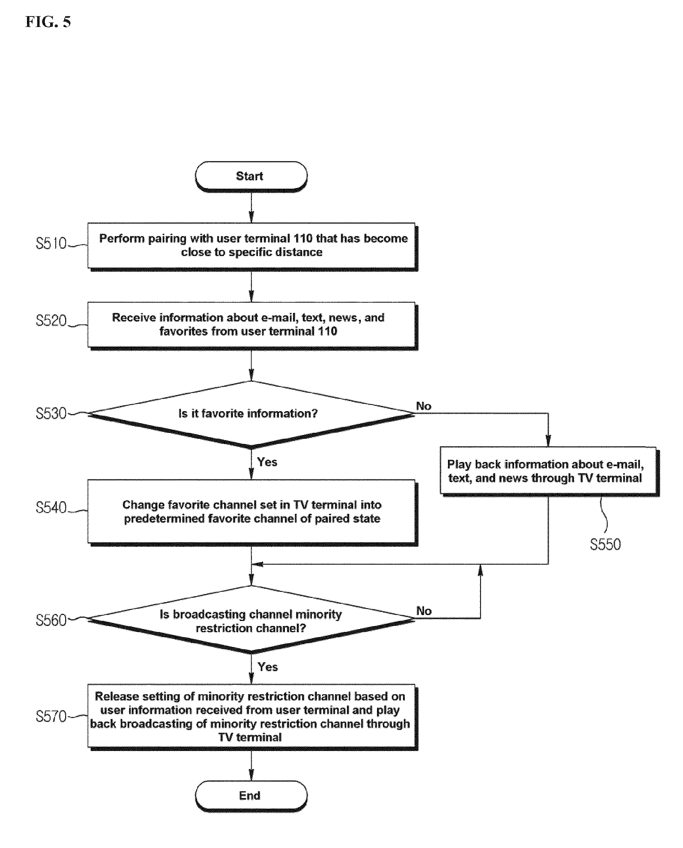

FIG. 5 is a flowchart illustrating a personalization service method linked to a user terminal which is performed by the broadcasting reception terminal in accordance with an embodiment of the present invention.

Referring to FIG. 5, when the user terminal 110 is brought close to a specific distance, the broadcasting reception terminal 120 in accordance with an embodiment of the present invention performs pairing with the user terminal 110 at step S510.

In this case, the broadcasting reception terminal 120 performs pairing with the user terminal 110 using a short-distance wireless communication and M2M communication method.

Thereafter, the broadcasting reception terminal 120 receives information about e-mail, text, news, and favorite TV channels from the paired user terminal 110 at step S520.

In this case, the broadcasting reception terminal 120 may receive user information, including the name, age, and telephone number of a user, from the user terminal 110.

Thereafter, the broadcasting reception terminal 120 sets a corresponding menu based on the received information about e-mail, text, news, and favorite TV channels or displays the received information on a screen of the TV terminal.

That is, if the information received from the user terminal 110 is information about favorite TV channels (Yes at step S530), the broadcasting reception terminal 120 changes a favorite TV channel set in the TV terminal into a predetermined favorite TV channel of the paired state and sets the predetermined favorite TV channel as a favorite TV channel at step S540.

If the information received from the user terminal 110 is information about e-mail, text, and news (No at step S530), the broadcasting reception terminal 120 sends the information about e-mail, text, and news to the TV terminal so that the information about e-mail, text, and news is displayed on a screen of the TV terminal at step S550.

That is, when the information about e-mail, text, and news is received from the user terminal 110, the broadcasting reception terminal 120 sends the information about e-mail, text, and news to the TV terminal so that the information about e-mail, text, and news is played back on a screen of the TV terminal 130. Accordingly, a user can check data or information, received from the user terminal 110, through the TV terminal having a large screen at a glance.

If a broadcasting channel being played back by the TV terminal 130 is set as a minor restriction TV channel (Yes at step S560), the broadcasting reception terminal 120 releases the setting of the minor restriction TV channel, not being played back by the TV terminal, based on the user information received from the user terminal 110 and plays back the broadcasting of the minor restriction TV channel through the TV terminal at step S570.

That is, the broadcasting reception terminal 120 releases the restriction setting of a broadcasting channel, set as a minor restriction TV channel, based on the user information including the age of the user and changes the broadcasting channel into a channel that is able to be viewed so that corresponding broadcasting may be played back.

Furthermore, in the state in which the broadcasting reception terminal 120 has been paired with the user terminal 110, the broadcasting reception terminal 120 may set a broadcasting channel, being played back through the TV terminal 130, as a favorite TV channel or a minor restriction TV channel in response to a selection signal from the remote controller 122.

Furthermore, the broadcasting reception terminal 120 may perform control so that applications (including text, e-mail, and SNS) being executed by the user terminal 110 when being paired with the user terminal 110 are automatically executed through the TV terminal 130. For example, the broadcasting reception terminal 120 may display an image of a channel received through the TV terminal of an ON state while a user listens to music, but may output the music in sound or execute the aforementioned operation in response to a user selection.

As described above, the present invention can realize the personalization service system and method linked to a user terminal, wherein when a smart phone used by a user is brought close to TV or an STB within a specific distance, the smart phone and the TV or STB are automatically paired and menus, such as e-mail, news information, and favorite TV channels received by the smart phone, are reproduced on a screen of the TV, thereby enabling the user to use information stored in the smart phone and to use TV menus, frequently used by the user, easily and immediately through the TV having a wide screen.

In accordance with the present invention, convenience of information recognition and the improvement of a recognition method can be provided to a user through a handset using a short-distance wireless communication and M2M communication technology and a synchronization technology between TV and an STB.

Furthermore, user convenience can be improved because e-mail, text, and news can be viewed through a wide TV screen not through a smart phone having a relatively small screen. Furthermore, convenience of the use of TV can be increased because the restriction function of TV is automatically released using an automatic pairing function between a smart phone and TV.

Furthermore, a user can use TV menus, frequently used by the user only, immediately and easily in addition to information stored in a smart phone through wide screen TV.

It should be understood that any reference to an element herein using a designation such as "first," "second," and so forth does not generally limit the quantity or order of those elements. Rather, these designations may be used herein as a convenient method of distinguishing between two or more elements or instances of an element. Thus, a reference to first and second elements does not mean that only two elements may be employed there or that the first element must precede the second element in some manner. Also, unless stated otherwise a set of elements may comprise one or more elements. In addition, terminology of the form "at least one of: A, B, or C" used in the description or the claims means "A or B or C or any combination of these elements."

Those skilled in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the examples disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP communication, or any other such configuration.

The methods or algorithms described in connection with the examples disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor may read information from, and write information to, the storage medium. In the alternative, the storage medium may be integral to the processor. The processor and the storage medium may reside in an ASIC.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media may comprise RAM, ROM, EEPROM, CD-ROM or other optical disk storage, magnetic disk storage or other magnetic storage devices, or any other medium that may be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosed examples is provided to enable any person skilled in the art to make or use the present invention. Various modifications to these examples will be readily apparent to those skilled in the art, and the generic principles defined herein may be applied to other examples without departing from the spirit or scope of the invention. Thus, the present invention is not intended to be limited to the examples shown herein but is to be accorded the widest scope consistent with the principles and novel features disclosed herein.

## Claims

1. A personalization service system linked to a user terminal (110), comprising:
a user terminal (110) configured to perform pairing with a STB (set top box) (120) when the STB (120) is brought close to a specific distance and to send personalization information of the user terminal (110) to the paired STB (120); and
the STB (120) configured to perform pairing with the user terminal (110) when the user terminal (110) is brought close to a specific distance and to perform control so that the personalization information is received from the user terminal (110) and displayed at a TV terminal (130),
wherein the STB (120) recognizes the displayed personalization information and performs a service or function linked to the personalization information, and
wherein the personalization information comprises e-mail and text message personally received by a user, news personally used by the user, information about favorite TV channels, applications operating in background, and applications being executed when performing the pairing.

2. The personalization service system according to claim 1, wherein the STB (120) sets a broadcasting channel, played back by the TV terminal (130), as a favorite TV channel or a minor restriction TV channel in response to a selection signal from a remote controller (122) in the state in which the STB (120) has been paired with the user terminal (110).

3. The personalization service system according to claim 2, wherein the STB (120) determines a current favorite TV channel for the TV terminal with the favorite TV channel of the user terminal (110) which is currently paired with the STB (120).

4. The personalization service system according to claim 3, wherein after being paired with the user terminal (110), the STB (120) receives user information comprising a name, age, and telephone number of a user from the user terminal (110), releases a setting of a minor restriction TV channel not played back by the TV terminal (130) based on the received user information, and plays back a broadcasting of the minor restriction TV channel through the TV terminal (130).

5. The personalization service system according to claim 1, wherein the STB (120) executes and displays an application, being executed by the user terminal (110) or waiting in background when performing the pairing, in response to a user selection.

6. The personalization service system according to claim 1, wherein the STB (120) performs the pairing with the user terminal (110) using a short-distance wireless communication and Machine-to-Machine (M2M) communication method.

7. A STB (set top box) (120) for receiving information or data from a user terminal (110) and displaying the information or data on a TV terminal (130), the STB (120) comprising:
a communication unit (310) configured to send and receive data or information to and from a user terminal (110) over a communication network;
a TV connection unit (320) configured to connect with the TV terminal (130);
a data storage unit (330) configured to store data or information received from the user terminal (110) or store file information output by the TV terminal (130);
a packet generation unit (340) configured to generate a packet comprising file information and selection location information when a selection signal is generated by a manipulation of the user terminal (110)or a remote controller (122);
a location confirmation unit (350) configured to receive the information about the selection signal and location from the user terminal (110), convert the information about the selection signal and location into a corresponding location on a screen of the TV terminal, (130) and check the selection location of the user; and
a control unit (360) configured to perform pairing with the user terminal (110) when the user terminal (110) is brought close to a specific distance, to receive information about e-mail, text message, news, and favorite TV channels from the user terminal (110), and to perform control so that the information about e-mail, text message, news, and favorite TV channels is displayed on the TV terminal (130).

8. The STB (120) according to claim 7, wherein the control unit (360) sets a broadcasting channel, played back by the TV terminal (130), as a favorite TV channel or a minor restriction TV channel in response to a selection signal from the remote controller (122) in the state in which the STB (120) has been paired with the user terminal (110).

9. The STB (120) according to claim 8, wherein the control unit (360) determines a current favorite TV channel for the TV terminal (130) with the favorite TV channel of the user terminal (110) which is currently paired with the STB (120) .

10. The STB (120) according to claim 9, wherein after the pairing with the user terminal (110) is performed, the control unit (360) receives user information comprising a name, age, and telephone number of a user from the user terminal (110), releases a setting of a minor restriction TV channel not played back by the TV terminal (130) based on the received user information, and plays back a broadcasting of the minor restriction TV channel through the TV terminal (130).

11. The STB (120) according to claim 7, wherein the control unit (360) performs the pairing with the user terminal (110) using a short-distance wireless communication and Machine-to-Machine (M2M) communication method.

12. A computer program product stored in a tangible computer readable medium,
the computer program product is for a STB (set top box) (120) for receiving information or data from a user terminal (110) and displaying the information or data on a TV terminal (130),
the computer program product comprising:
codes for sending and receiving data or information to and from a user terminal (110) over a communication network;
codes for connecting with the TV terminal (130);
codes for storing data or information received from the user terminal (110) or storing file information output by the TV terminal (130);
codes for generating a packet comprising file information and selection location information when a selection signal is generated by a manipulation of the user terminal (110) or a remote controller (122);
codes for receiving the information about the selection signal and location from the user terminal (110), converting the information about the selection signal and location into a corresponding location on a screen of the TV terminal (130), and checking the selection location of the user; and
codes for controlling pairing with the user terminal (110) when the user terminal (110) is brought close to a specific distance, receiving information about e-mail, text message, news, and favorite TV channels from the user terminal (110), and performing control so that the information about e-mail, text message, news, and favorite TV channels is displayed on the TV terminal (130).

13. The computer program product according to claim 12, wherein the codes for controlling comprises codes for setting a broadcasting channel, played back by the TV terminal (130), as a favorite TV channel or a minor restriction TV channel in response to a selection signal from the remote controller in the state in which the STB (120) has been paired with the user terminal (110).

14. The computer program product according to claim 13, wherein codes for controlling comprises codes for determining a current favorite TV channel for the TV terminal (130) with the favorite TV channel of the user terminal (110) which is currently paired with the STB (120) .

15. The computer program product according to claim 13, wherein after the pairing with the user terminal (110) is performed, the codes for controlling comprises codes for receiving user information comprising a name, age, and telephone number of a user from the user terminal (110), codes for releasing a setting of a minor restriction TV channel not played back by the TV terminal (130) based on the received user information, and codes for playing back a broadcasting of the minor restriction TV channel through the TV terminal (130).
